# EUROPÄISCHE PATENTSCHRIFT

(11) **EP 3 042 370 B1**
(45) Veröffentlichungstag und Bekanntmachung des Hinweises auf die Patenterteilung: **10.08.2022**
(21) Anmeldenummer: 14758379.3
(22) Anmeldetag: 01.09.2014
(51) Int. Cl.: G08G 1/056, G01C 21/36, B60W 40/072, G08G 1/16

(54) **VERFAHREN UND STEUER- UND ERFASSUNGSEINRICHTUNG ZUM PLAUSIBILISIEREN EINER FALSCHFAHRT EINES KRAFTFAHRZEUGS**
METHOD AND CONTROL AND DETECTION DEVICE FOR CONFIRMING THE PLAUSIBILITY THAT A DRIVER OF A MOTOR VEHICLE IS DRIVING THE WRONG WAY ALONG A CARRIAGEWAY
PROCÉDÉ ET DISPOSITIF DE COMMANDE ET DE DÉTECTION PERMETTANT DE DÉTERMINER LA PLAUSIBILITÉ D'UNE CIRCULATION À CONTRE-SENS D'UN VÉHICULE AUTOMOBILE

(30) Priorität: 06.09.2013 DE 102013217833; 15.11.2013 DE 102013223398; 08.05.2014 DE 102014208622
(43) Veröffentlichungstag der Anmeldung: 13.07.2016
(73) Patentinhaber: Robert Bosch GmbH, 70442 Stuttgart (DE)
(72) Erfinder: JESCHKE, Christian, 71717 Beilstein (DE)
(86) Internationale Anmeldenummer: PCT/EP2014/068463
(87) Internationale Veröffentlichungsnummer: WO 2015/032705

(56) Entgegenhaltungen:
- EP-A1- 1 544 829
- EP-A1- 2 144 213
- EP-A2- 1 327 968
- DE-A1- 19 934 774
- DE-A1-102008 017 972
- DE-A1-102012 220 138

## Beschreibung

Die vorliegende Erfindung betrifft ein Verfahren und eine Steuer- und Erfassungseinrichtung zum Plausibilisieren einer Falschfahrt eines Kraftfahrzeugs bei einer Auffahrt auf eine Richtungsfahrbahn.

### Stand der Technik

Falschfahrer, auch als Geisterfahrer bezeichnet, verursachen im Fall eines Unfalls Tote, Verletzte und erheblichen Sachschaden. Unter einer Falschfahrt wird hier das Fahren entgegen der vorgeschriebenen Fahrtrichtung auf einer Richtungsfahrbahn verstanden. Eine Richtungsfahrbahn ist eine vom Gegenverkehr baulich getrennte Fahrbahn. Richtungsfahrbahnen sind auf Autobahnen oder Schnellstraßen, wie ausgebauten Bundesstraßen, zu finden. Falschfahrten können in Vorwärtsfahrten und Rückwärtsfahrten unterteilt werden, wobei die Vorwärtsfahrten durch eine falsche Auffahrt oder durch Wenden initiiert werden.

Über die Hälfte der Falschfahrten beginnen an Anschlussstellen von Bundesautobahnen. Gerade bei den Falschfahrten auf Autobahnen kommt es bei Unfällen aufgrund der hohen Fahrgeschwindigkeiten und damit der hohen Kollisionsgeschwindigkeiten häufig zu Unfällen mit Todesfolge.

Die Erkennung von Falschfahrten über Navigationsgeräte ist nicht immer zuverlässig möglich, da die Informationen des Navigationsgerätes, wie Straßenklasse und -richtung, für die meisten Fälle der Falschfahrten zu spät erfolgen, das heißt, dass sich die Fahrzeuge dann bereits im Fahrschlauch entgegen der Fahrtrichtung befinden.

Moderne Kraftfahrzeuge verwenden Inertialsensoren, wie Beschleunigungs- und Gierratensensoren, sowie den Lenkwinkel zur Bestimmung des Fahrzeugzustandes, um Sicherheits- und Komfortsysteme zu realisieren.

Darüber hinaus verfügt eine Vielzahl von Kraftfahrzeugen heutzutage über ein internes GPS-Modul, zum Beispiel für ein Navigationssystem oder eine Positionsbestimmung des Kraftfahrzeugs. Bereits jetzt und zukünftig werden immer mehr Kraftfahrzeuge mit Video-Sensorik ausgestattet, welche ebenfalls unterschiedliche Informationen verarbeitet und ausgibt, wie zum Beispiel die Erkennung an Anzeige von Schildern.

EP 1 327 968 A2 offenbart ein Verfahren zum Erkennen eines falschen Auffahrens auf eine Autobahn. Ferner beschreibt DE 199 34 774 A1 eine Steuerungsvorrichtung und ein Steuerungsverfahren für ein Fahrzeug zum Vermeiden von Falschfahrten.

### Offenbarung der Erfindung

Das erfindungsgemäße Verfahren zum Plausibilisieren einer Falschfahrt eines Kraftfahrzeugs bei einer Auffahrt auf eine Richtungsfahrbahn umfasst grundsätzlich folgende Schritte:
- Erfassen mindestens einer Kurveninformation eines aktuellen Fahrwegs des Kraftfahrzeugs, wobei für das Erfassen mindestens ein Sensor des Kraftfahrzeugs verwendet wird, wobei der mindestens eine Sensor einen Bildsensor umfasst;
- Ermitteln mindestens einer Kurveninformation eines zulässigen Fahrwegs;
- Bestimmen einer Abweichung zwischen der erfassten Kurveninformation und der ermittelten Kurveninformation; und
- Plausibilisieren einer Falschfahrt, wenn eine Abweichung vorliegt oder ein Grenzwert für eine Abweichung verletzt wird.

Kennzeichnend ist vorgesehen, dass mittels eines Navigationssystems des Kraftfahrzeugs erfasst wird, ob sich das Kraftfahrzeug auf einer Gegenfahrbahn befindet, und dass die Z Kurveninformation des zulässigen Fahrwegs mittels des Navigationssystems des Kraftfahrzeugs ermittelt wird.

Das erfindungsgemäße Verfahren ermöglicht sehr vorteilhaft die Erfassung einer Wirkkette, welche eine Plausibilisierung, das heißt Überprüfung oder Vorprüfung, als Vorbereitung oder Bestandteil einer Detektion oder Erkennung einer Falschfahrt ermöglicht. Das erfindungsgemäße Verfahren kann auch bereits als Detektion einer Falschfahrt angesehen und verwendet werden. Die Sicherheit wird durch die Erfassung von Umfelddaten, die Prädiktion des Fahrwegs oder der Fahrroute und/oder der Lenkabsicht erreicht, was die Zuverlässigkeit und Robustheit des Verfahrens erhöht. Dadurch kann die Erfindung unbeabsichtigte Falschfahrten sicher erkennen und die allgemeine Verkehrssicherheit erhöhen. Das vorliegende Verfahren betrachtet gezielt das Falschfahrverhalten eines Kraftfahrzeugs bzw. eines Kraftfahrers bei einer Auffahrt oder in einer Anschlussstelle, da dort die meisten Falschfahrten entstehen. So kann vorteilhafterweise die Falschfahrt bereits vor Auffahrt in die eigentliche Straße erfindungsgemäß plausibilisiert und/oder detektiert werden.

Die Kurveninformation basiert vorzugsweise auf einer Kurve beziehungsweise einer Richtungsänderung einer Straße oder einer Auf- oder Abfahrt zu der Straße. Dies ist ein Unterschied zu einer Richtungsänderung des Fahrzeugs durch den Fahrer, die zum Beispiel auch ein Spurwechsel auf einer Straße sein kann. Dies erhöht die Robustheit des Verfahrens, da normale Fahrmanöver wie ein Spurwechsel nicht für die Plausibilisierung einer Falschfahrt betrachtet werden.

Ein zulässiger Fahrweg kann ein Fahrweg oder eine Route für das Kraftfahrzeug sein, der den Verkehrsvorschriften wie der Straßenverkehrsordnung genügt. Er kann zum Beispiel von einem Navigationsmodul prognostiziert oder als wahrscheinlich angesehen werden. Anders ausgedrückt ist dies der Weg, den das Fahrzeug nehmen sollte, um korrekt zu fahren.

Die einzelnen Schritte des Verfahrens können vollständig im Kraftfahrzeug, in einer externen Einheit, wie einem zentralen Server, oder parallel sowie verteilt auf beiden Systemen ablaufen. Die Ausführung der Schritte ist nicht an die genannte Reihenfolge gebunden.

In einer besonderen Ausführungsform umfasst die Kurveninformation einen Radius, eine Richtung und/oder einen Verlauf der Kurve. Jede einzelne Information für sich oder in Kombination kann als Grundlage für die Bestimmung oder Berechnung einer Abweichung von einem Ist-Weg, das heißt dem tatsächlich gefahrenen Weg oder der Kurve, zu einem Soll-Weg, das heißt des ermittelten oder wahrscheinlichsten Fahrwegs, dienen. So kann die Bestimmung schnell und sicher erfolgen. Als Richtung kann die Fahrtrichtung in absoluter Weise, zum Beispiel als Himmelsrichtung, oder relativ, zum Beispiel über einen Lenkwinkel, erfolgen. Der Radius kann neben der reinen Krümmungsinformation auch bereits Informationen über die Krümmungsrichtung enthalten. So kann zum Beispiel ein Radius einer Rechtskurve ein positives Vorzeichen haben, während ein Linksradius dann ein negatives Vorzeichen hat. Der Verlauf einer Kurve kann sich beispielsweise aus mehreren (Teil)-Radien und auch Geraden zusammensetzen. So kann eine Kurveninformation oder Information zu einer Wegstrecke einer Anschlussstelle eine Signatur eines möglichen oder korrekten, das heißt vorschriftsmäßigen, Wegs sein.

Erfindungsgemäß wird erfasst, ob das Kraftfahrzeug sich auf einer Gegenfahrbahn befindet. Dieses relativ schnell zu erfassende Kriterium kann entweder zusätzlich für die Plausibilisierung oder als Startkriterium für die Plausibilisierung verwendet werden. Auf beide Arten kann die Sicherheit und Zuverlässigkeit des Verfahrens erhöht werden. Dieses Kriterium kann mittels Sensorik, wie zum Beispiel einer Video-Sensorik, oder einem Navigationsgerät oder -modul erfasst werden.

Es ist vorgesehen, dass für das Erfassen mindestens ein Sensor des Kraftfahrzeugs verwendet wird. Da die meisten Kraftfahrzeuge inzwischen verschiedene Sensoren verbaut haben, können diese beziehungsweise deren Signale einfach für das Verfahren verwendet werden. Die Signale können direkt oder indirekt, wie zum Beispiel verarbeitet oder als Basis für abgeleitete Größen oder Werte, verwendet werden. Als Sensoren können zum Beispiel Bildsensoren, umfassend Kameras oder Videokameras, Radarsensoren, Beschleunigungssensoren, Radsensoren, Lenkwinkelsensoren, GPS-Geräte, aber auch Navigationsgeräte oder diese und andere Daten verarbeitende Rechner- oder Steuereinheiten verwendet werden. Erfindungsgemäß werden die beiden Sensortypen Navigationsmodul und Video-Sensorik verwendet, da sich die beiden Typen ergänzen. Dies erhöht die Sicherheit und Robustheit des Verfahrens.

Für das Ermitteln einer Kurveninformation eines zulässigen Fahrwegs kann zunächst ein zulässiger Fahrweg und anschließend mindestens eine zulässige Kurveninformation des zulässigen Fahrwegs ermittelt werden. Diese Aufteilung bietet die Möglichkeit, unterschiedliche Einheiten zu verwenden, die am besten für jede Teilaufgabe geeignet sind. So kann der zulässige Fahrweg beispielsweise von einem Navigationsmodul und eine Kurveninformation von einem Sensor des Fahrzeugs ermittelt oder erfasst werden, vorzugsweise von dem Sensor zur Erfassung des aktuellen Fahrwegs.

Es ist vorgesehen, dass für das Ermitteln ein Navigationssystem des Kraftfahrzeugs verwendet wird. Mittlerweile sind viele Kraftfahrzeuge mit einem Navigationssystem ausgerüstet, sodass dessen Kapazitäten, insbesondere das Kartenmaterial, genutzt werden können. Inzwischen steht immer mehr hochgenaues Kartenmaterial zur Verfügung, zum Beispiel mit einer Genauigkeit im Zentimeterbereich. Insbesondere in Zusammenarbeit mit einem genaueren Sensor für die nähere Umgebung des Kraftfahrzeugs beziehungsweise den davorliegenden Bereich wie eine Video- oder Stereovideokamera können die Robustheit und Zuverlässigkeit des Verfahrens und damit die Sicherheit von Fahrzeug und Insassen erhöht werden.

Auch ist es möglich, dass das Verfahren im Bereich einer Auffahrt auf eine Richtungsfahrbahn aktiviert wird. Auf diese Weise können Fehlwarnungen bei normaler Fahrt unterdrückt werden, was die Sicherheit und die Akzeptanz der Nutzer erhöht.

Weiterhin können das Ermitteln, Bestimmen und/oder das Plausibilisieren in einer dem Kraftfahrzeug externen Einrichtung durchgeführt werden. Als Ersatz- oder Backupsystem kann eine externe Einrichtung wie ein Server zum Beispiel des Fahrzeugherstellers verwendet werden. Es kann auch vorgesehen sein, das Verfahren lediglich in der externen Einrichtung ablaufen zu lassen, zum Beispiel, wenn das Kraftfahrzeug nicht die benötigte Sensorik, das Kartenmaterial oder einen Teil davon aufweist. Die Kommunikation zwischen der externen Einrichtung und dem Server kann über einen Mobilfunkkanal hergestellt werden. Erfindungsgemäß wird eine Steuer- und Erfassungseinrichtung zum Plausibilisieren einer Falschfahrt eines Kraftfahrzeugs bei einer Auffahrt auf eine Richtungsfahrbahn zur Verfügung gestellt, aufweisend Mittel eingerichtet zum Erfassen mindestens einer Kurveninformation eines aktuellen Fahrwegs des Kraftfahrzeugs, wobei das Mittel mindestens einen Bildsensor aufweist; Mittel eingerichtet zum Ermitteln mindestens einer Kurveninformation eines zulässigen Fahrwegs; Mittel eingerichtet zum Bestimmen einer Abweichung zwischen der erfassten Kurveninformation und der ermittelten Kurveninformation; und Mittel eingerichtet zum Plausibilisieren einer Falschfahrt, wenn eine Abweichung vorliegt oder ein Grenzwert für eine Abweichung verletzt wird. Kennzeichnend ist vorgesehen, dass die mindestens eine Kurveninformation eines zulässigen Fahrwegs mittels eines Navigationssystems des Kraftfahrzeugs ermittelt wird, mittels welchem ferner erfasst wird, ob sich das Kraftfahrzeug auf einer Gegenfahrbahn befindet.

Es gelten die gleichen Vorteile und Modifikationen wie oben beschrieben.

Das Mittel zum Ermitteln, das Mittel zum Bestimmen und/oder das Mittel zum Plausibilisieren können eine Steuerung, ein Steuergerät oder eine geeignete Recheneinheit und/oder ein Navigationssystem umfassen.

Die Steuer- und Erfassungseinrichtung beziehungsweise das Mittel zum Erfassen weist einen Sensor wie einen Bildsensor aufweisen. Ein Bildsensor, wie eine Kamera für Einzelbilder oder eine Videokamera für Filmsequenzen, kann die Fahrbahnbeschaffenheit, wie zum Beispiel Richtung oder Neigung, gut erkennen und liefert somit eine solide Grundlage für das Verfahren.

Ferner kann das Kraftfahrzeug beziehungsweise die Steuer- und Erfassungseinrichtung mindestens einen Inertialsensor aufweisen. Zum Beispiel zusätzlich können die Ergebnisse des Bildsensors mit einem Inertialsensor, das heißt einem Beschleunigungs- und/oder Drehratensensor, abgeglichen werden. Dies erhöht die Zuverlässigkeit und Sicherheit des Kraftfahrzeugs und dessen Insassen.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine schematische Darstellung einer Anschlussstelle einer Richtungsfahrbahn,
Figur 2 eine schematische Darstellung einer hochgenauen Karteninformation einer Anschlussstelle,
Figur 3 eine schematische Darstellung eines Kraftfahrzeugs mit einer Steuer- und Erfassungseinrichtung, und
Figur 4 in Form eines Flussdiagramms ein Verfahren zum Plausibilisieren einer Falschfahrt eines Kraftfahrzeugs.

### Ausführungsformen der Erfindung

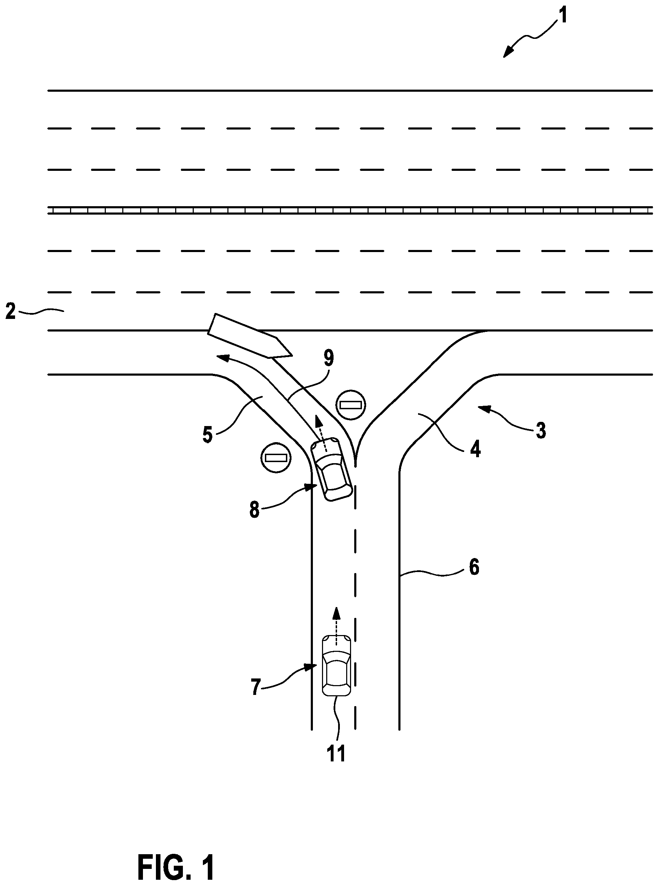

Figur 1 zeigt eine Straße oder Autobahn 1 mit zwei baulich voneinander getrennten Richtungsfahrbahnen 2, sowie eine Anschlussstelle 3. Die Anschlussstelle 3 hat eine Auffahrrampe 4 und eine Abfahrrampe 5. Ausgehend von einer gemeinsamen Fahrbahn 6 dient die Auffahrrampe 4 oder Auffahrt zur Auffahrt auf die Richtungsfahrbahn 2 der Autobahn 1, während die Abfahrrampe 5 oder Abfahrt zum Verlassen der Richtungsfahrbahn 2 dient.

Ein falsch fahrendes Fahrzeug oder Falschfahrer 11 ist in einer ersten Position 7 und einer zweiten Position 8 dargestellt. In der ersten Position 7 befindet sich das Fahrzeug 11 noch auf der Fahrbahn 6, was als Vorbereitung zu einer Falschfahrt oder auch schon als Falschfahrt angesehen werden kann. In der Position 8 ist das Fahrzeug 11 bereits in die Abfahrrampe 5 eingebogen, welche baulich getrennt von der Auffahrrampe 4 ist. Damit befindet sich das Kraftfahrzeug 11 bereits in einer Richtungsfahrbahn und befindet sich damit auf einer Falschfahrt.

Unter dem Begriff Fahrzeug oder Kraftfahrzeug werden hier sämtliche angetriebenen Verkehrsmittel, wie zum Beispiel Personenkraftwagen, Lastkraftwagen, Busse, Motorräder usw., verstanden.

Basierend auf der aktuellen Position des Fahrzeugs 11, sowie weiteren Parametern, wie zum Beispiel der Geschwindigkeit, dem Lenkwinkel oder der Beschleunigung, ist der aktuelle Fahrweg oder die Trajektorie 9 des Fahrzeugs 11 dargestellt. Der Begriff aktueller Fahrweg kann dabei die aktuelle Position und/oder den aktuellen Zustand des Fahrzeugs 11, die bisher zurückgelegte Wegstrecke und/oder die voraussichtlich in naher Zukunft zurückzulegende Strecke umfassen. Die in Zukunft zurückzulegende Strecke kann zum Beispiel durch den Erfassungsbereich eines Sensors, einen festen Betrag in Metern wie zum Beispiel zwischen 0 und 50 Metern, vorzugsweise zwischen 0 und 20 Metern, oder durch einen von der Geschwindigkeit abhängigen Wert wie zum Beispiel den Bremsweg zum Stillstand definiert werden.

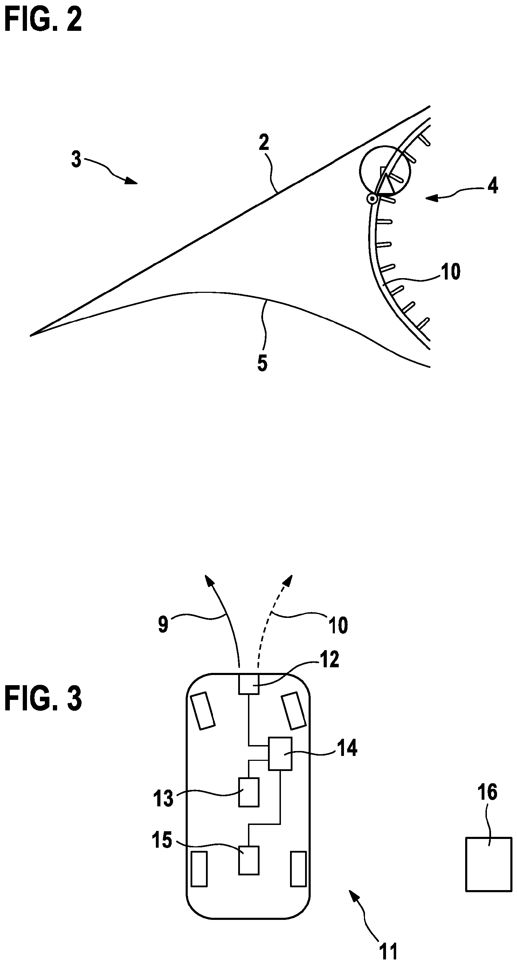

Figur 2 zeigt beispielhaft einen Ausschnitt einer hochgenauen Karteninformation von einem Navigationsmodul, der die Autobahnanschlussstelle 3 aus Figur 1 oder eine ähnliche Anschlussstelle darstellt. Dargestellt sind die Richtungsfahrbahn 2, die Auffahrt 4 und die Abfahrt 5. Die Auffahrrampe 4 ist mit einem zulässigen oder wahrscheinlichsten Fahrweg 10 überlagert dargestellt.

Der wahrscheinlichste Fahrweg 10 ist derjenige Weg, den das Navigationsgerät oder Navigationsmodul des Kraftfahrzeugs berechnet. Die Berechnung orientiert sich dabei an korrekten, das heißt von der Straßenverkehrsordnung (StVO) erlaubten Streckenführungen. Für den Bereich einer Anschlussstelle 3 bedeutet das konkret, dass das Navigationssystem den Fahrweg entlang der Auffahrrampe 4 wählt.

In Figur 3 ist schematisch ein Kraftfahrzeug 11 mit einer Steuer- und Erfassungseinrichtung zum Plausibilisieren einer Falschfahrt des Kraftfahrzeugs 11 bei einer Auffahrt auf die Richtungsfahrbahn 2 dargestellt, wobei das Kraftfahrzeug beispielsweise dem Falschfahrer 11 aus Figur 1 entspricht. Entsprechend ist für das Kraftfahrzeug 11 der aktuelle Fahrweg 9 sowie gestrichelt der zulässige Fahrweg 10 dargestellt. Das Kraftfahrzeug 11 beziehungsweise die Steuer- und Erfassungseinrichtung umfasst mindestens einen Sensor 12, der hier beispielhaft für eine Vielzahl von Sensoren dargestellt ist. Zusätzlich zu dem erfindungsgemäßen Bildsensor kann der Sensor 12 zum Beispiel ein Radarsensor, ein Beschleunigungssensor, ein Radsensor, ein Lenkwinkelsensor, ein GPS-Gerät oder ähnliches sein. Das Kraftfahrzeug 11 beziehungsweise die Steuer- und Erfassungseinrichtung umfasst ferner ein Navigationsgerät 13 und eine Steuerung 14. Die Steuerung 14 steht mit dem Sensor 12 und dem Navigationsgerät 13 in Kommunikation, dies kann drahtgebunden oder drahtlos sein. Ebenso ist die Steuerung mit einer Kommunikationsschnittstelle 15 verbunden, welche dazu eingerichtet ist, mit einer externen Einrichtung 16, wie einem zentralen Server, zu kommunizieren.

Der Sensor 12, das Navigationsgerät 13, die Steuerung 14 und die Kommunikationsschnittstelle 15 können - wie hier dargestellt - als selbstständige Einheiten ausgebildet sein, oder sie können in einer oder mehreren Einheiten integriert sein. Insbesondere ist es nicht erforderlich, dass jeder Bestandteil als Hardware ausgeführt ist, ebenso können einzelne Funktionen als Softwareroutinen oder Programme realisiert sein.

Mittels der Kommunikationsschnittstelle 15 können dem Kraftfahrzeug 11 beziehungsweise der Steuer- und Erfassungseinrichtung Informationen, wie Kartendaten, und/oder Funktionalitäten, wie ein Zugriff auf Programme der externen Einrichtung 16, zur Verfügung gestellt werden.

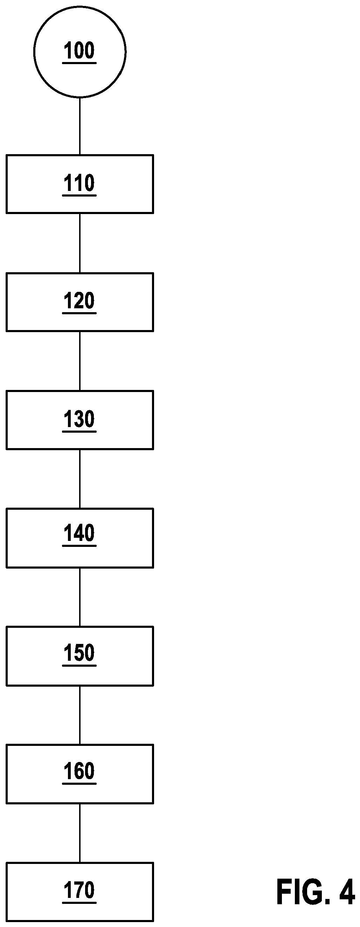

Anhand von Figur 4 wird nun in Zusammenschau mit den Figuren 1 bis 3 ein Verfahren zum Plausibilisieren einer Falschfahrt eines Kraftfahrzeugs 11 beschrieben.

In einem ersten optionalen Schritt 100 wird geprüft, ob sich das Kraftfahrzeug 11 im Bereich einer Anschlussstelle 3 befindet. Der Begriff Bereich umfasst sowohl den unmittelbaren Bereich der Anschlussstelle 3 als auch die Anfahrt zu einer oder die nähere Umgebung der Anschlussstelle 3.

Ist dies der Fall, wird in einem Schritt 110 geprüft oder detektiert, ob sich das Kraftfahrzeug 11 fälschlicherweise auf der Gegenfahrbahn befindet. Dies ist in Figur 1 in der ersten Position 7 dargestellt. Diese Erfassung kann zum Beispiel einmalig erfolgen, wie an der ersten Position 7, oder während des Verfahrens wiederholt werden.

In einem weiteren Schritt 120 wird mindestens eine Kurveninformation des aktuellen Fahrwegs 9 des Kraftfahrzeugs 11 erfasst. Diese Erfassung kann bereits an der ersten Position 7 spätestens jedoch im Bereich oder an der zweiten Position 8 beginnen. Diese Erfassung basiert auf der Sensorik 12 des Kraftfahrzeugs 11. Zusätzlich kann die Kurveninformation des aktuellen Fahrwegs 9 mittels eines externen Systems, wie zum Beispiel einem GPS-Sender/Empfänger stattfinden. Der aktuelle Fahrweg 9 kann sich zusammensetzen aus gespeicherten Informationen über den bisherigen Fahrweg, aus aktuellen Zustandsdaten der jetzigen Fahrzeugposition sowie aus prädiktiven Daten, zum Beispiel der Sensoren 12 über den zukünftigen Weg wie den Verlauf der Straße insbesondere einer Kurve der Straße, beispielsweise im Blickbereich eines Videosensors.

In diesem Beispiel umfasst die Kurveninformation die Bild- und/oder Videoinformation über den vor dem Kraftfahrzeug 11 liegenden Bereich der Abfahrrampe 5, insbesondere des Fahrbahnverlaufs, wie Kurvenrichtung und Kurvenradius. Diese Information kann noch ergänzt oder plausibilisiert werden durch weitere Sensorinformationen, wie zum Beispiel von einem Inertialsensorsystem, oder dem Navigationssystem 13.

In einem weiteren Schritt 130 wird der zulässige und damit für das Navigationssystem 13 wahrscheinlichste Fahrweg 10 für das Kraftfahrzeug auf einer korrekten oder zulässigen Fahrbahn, das heißt hier der Auffahrrampe 4, ermittelt. Diese Ermittlung durch das Navigationssystem 13 ist in Figur 2 dargestellt. Die korrekte Fahrbahn erlaubt dem Fahrzeug 11 eine Fahrt ohne Verletzung von Verkehrsregeln. Anschließend wird im gleichen Schritt mindestens eine Kurveninformation dieses zulässigen Fahrwegs ermittelt. Diese kann zum Beispiel für den zulässigen Fahrweg bereits hinterlegt sein, oder sie wird extrahiert oder berechnet. Ebenso kann vorgesehen sein, dass für bestimmte Straßen oder Straßentypen oder Anschlussstellen direkt zulässige Kurveninformationen hinterlegt sind, sodass ein zulässiger Fahrweg nicht erst ermittelt werden muss.

In dem nächsten Schritt 140 wird eine Abweichung zwischen der erfassten Kurveninformation, das heißt der Kurveninformation des aktuellen Fahrwegs 9, und der Kurveninformation des zulässigen Fahrwegs 10 bestimmt. Die Kurveninformationen des zulässigen Fahrwegs 10 können entweder direkt in der Karteninformation des Navigationssystems 13 hinterlegt sein, oder sie können aus dem zulässigen Fahrweg 10 berechnet werden. Diese Berechnung kann dann entweder von dem Navigationssystem 13 oder von der Steuerung 14 vorgenommen werden. Die Begriffe Kurveninformation und Kurvenradius können sowohl den Radius oder Verlauf der gesamten Kurve umfassen oder einen Radius oder Verlauf eines gewissen Teilabschnitts der Kurve. Die Abweichung kann als Differenz oder beispielsweise als Soll-Ist-Vergleich bestimmt werden.

Im Schritt 150 wird eine Falschfahrt plausibilisiert, wenn eine Abweichung gemäß Schritt 140 vorliegt oder ein Grenzwert für eine Abweichung verletzt wird. Wie zuvor beschrieben, können mehrere Kurveninformationen, wie zum Beispiel Radius, Neigung und/oder Richtung erfasst und verarbeitet werden. Entsprechend können auch mehrere Abweichungen für jede oder mehrere der Kurveninformationen bestimmt und für die Plausibilisierung betrachtet werden. Eine Plausibilisierung kann dann auf Basis aller Abweichungen, einer einzelnen oder von mehreren Abweichungen ausgeführt werden. Entsprechendes gilt für Grenzwerte für eine Abweichung, die vorgesehen sein können, um zum Beispiel eine gewisse Trägheit oder Toleranz des Systems zu ermöglichen. Dies kann zum Beispiel hilfreich sein, um eine kleine oder kurzzeitige Abweichung vom zulässigen oder wahrscheinlichsten Fahrweg zu tolerieren.

Ergibt die Plausibilisierung, das heißt Bewertung oder Überprüfung, der Informationen, dass diese zuverlässig sind, beziehungsweise dass ein gewisser Teil davon zuverlässig ist, kann in einem weiteren Schritt 160 die Falschfahrt detektiert werden.

Anschließend können in einem weiteren Schritt 170 Reaktionen auf die Detektion erfolgen. Dies kann passive Aktionen, wie Warnungen oder Warnhinweise an den Fahrer des Kraftfahrzeugs 11, und auch aktive Aktionen, wie zum Beispiel ein Eingriff in die Bewegung und/oder Lenkung des Kraftfahrzeugs 11, umfassen.

## Patentansprüche

1. Verfahren zum Plausibilisieren einer Falschfahrt eines Kraftfahrzeugs (11) bei einer Auffahrt auf eine Richtungsfahrbahn (2), wobei das Verfahren die Schritte umfasst:
- Erfassen mindestens einer Kurveninformation eines aktuellen Fahrwegs (9) des Kraftfahrzeugs (11), wobei für das Erfassen mindestens ein Sensor (12) des Kraftfahrzeugs (11) verwendet wird, wobei der mindestens eine Sensor einen Bildsensor umfasst;
- Ermitteln mindestens einer Kurveninformation eines zulässigen Fahrwegs (10);
- Bestimmen einer Abweichung zwischen der erfassten Kurveninformation und der ermittelten Kurveninformation; und
- Plausibilisieren einer Falschfahrt, wenn eine Abweichung vorliegt oderein Grenzwert für eine Abweichung verletzt wird,
- **dadurch gekennzeichnet, dass** mittels eines Navigationssystems (13) des Kraftfahrzeugs (11) erfasst wird, ob sich das Kraftfahrzeug (11) auf einer Gegenfahrbahn befindet, und dass die Kurveninformation des zulässigen Fahrwegs (10) mittels des Navigationssystems (13) des Kraftfahrzeugs (11) ermittelt wird.

2. Verfahren nach Anspruch 1, wobei die Kurveninformation einen Radius, Z eine Richtung und/oder einen Verlauf der Kurve (4, 5) umfasst.

3. Verfahren nach einem der Ansprüche 1 bis 32, wobei für das Ermitteln zunächst ein zulässiger Fahrweg (10) und anschließend mindestens eineKurveninformation des zulässigen Fahrwegs (10) ermittelt werden.

4. Verfahren nach einem der Ansprüche 1 bis 3, wobei das Verfahren im Bereich einer Auffahrt (3) auf die Richtungsfahrbahn (2) aktiviert wird.

5. Verfahren nach einem der Ansprüche 1 bis 4, wobei das Ermitteln (130), Bestimmen (140) und/oder das Plausibilisieren (150) in einer dem Kraftfahrzeug (11) externen Einrichtung (16) durchgeführt wird.

6. Steuer- und Erfassungseinrichtung zum Plausibilisieren einer Falschfahrt eines Kraftfahrzeugs (11) bei einer Auffahrt auf eine Richtungsfahrbahn (2), aufweisend
- Mittel eingerichtet zum Erfassen (12) mindestens einer Kurveninformation eines aktuellen Fahrwegs (9) des Kraftfahrzeugs (11), wobei das Mittel (12) mindestens einen Bildsensor aufweist;
- Mittel eingerichtet zum Ermitteln (13, 14) mindestens einer Kurveninformation eineszulässigen Fahrwegs (10);
- Mittel eingerichtet zum Bestimmen (14) einer Abweichung zwischen der erfassten Kurveninformation und der ermittelten Kurveninformation; und
- Mittel eingerichtet zum Plausibilisieren (14) einer Falschfahrt, wenn eine Abweichung_vorliegt oder ein Grenzwert für eine Abweichung verletzt wird,
**dadurch gekennzeichnet, dass** die mindestens eine Kurveninformation eines zulässigen Fahrwegs (10) mittels eines Navigationssystems (13) des Kraftfahrzeugs (11) ermittelt wird, mittels welchem ferner erfasst wird, ob sich das Kraftfahrzeug (11) auf einer Gegenfahrbahn befindet.

7. Steuer- und Erfassungseinrichtung nach Anspruch 76, wobei das Mittel zum Erfassen (12) mindestens einen Inertialsensor aufweist.

## Claims

1. Method for checking the plausibility of driving by a motor vehicle (11) being the wrong way along the carriageway on entering a directional carriageway (2), the method comprising the steps of:
- recording at least one piece of bend information for a current road (9) of the motor vehicle (11), the information being recorded using at least one sensor (12) of the motor vehicle (11), the at least one sensor comprising an image sensor;
- ascertaining at least one piece of bend information for a permissible road (10);
- determining a variance between the recorded bend information and the ascertained bend information; and
- checking the plausibility of driving being the wrong way along the carriageway if there is a variance or if a limit value for a variance is violated,
- **characterized in that** a navigation system (13) of the motor vehicle (11) is used to detect whether the motor vehicle (11) is on an opposite carriageway, and **in that** the bend information for the permissible road (10) is ascertained by means of the navigation system (13) of the motor vehicle (11).

2. Method according to Claim 1, wherein the bend information comprises a radius, a direction and/or a shape of the bend (4, 5).

3. Method according to either of Claims 1 and 2, wherein the ascertaining involves first a permissible road (10) and then at least one piece of bend information for the permissible road (10) being ascertained.

4. Method according to one of Claims 1 to 3, wherein the method is activated in the region of an entry (3) onto the directional carriageway (2).

5. Method according to one of Claims 1 to 4, wherein the ascertaining (130), determining (140) and/or the plausibility check (150) is carried out in a device (16) that is external to the motor vehicle (11).

6. Control and recording device for checking the plausibility of driving by a motor vehicle (11) being the wrong way along the carriageway on entering a directional carriageway (2), comprising
- means configured for recording (12) at least one piece of bend information for a current road (9) of the motor vehicle (11), the means (12) comprising at least one image sensor;
- means configured for ascertaining (13, 14) at least one piece of bend information for a permissible road (10);
- means configured for determining (14) a variance between the recorded bend information and the ascertained bend information; and
- means configured for checking the plausibility (14) of driving being the wrong way along the carriageway if there is a variance or if a limit value for a variance is violated,
**characterized in that** the at least one piece of bend information for a permissible road (10) is ascertained by means of a navigation system (13) of the motor vehicle (11), which is further used to detect whether the motor vehicle (11) is on an opposite carriageway.

7. Control and recording device according to Claim 6, wherein the means for recording (12) comprises at least one inertial sensor.

## Revendications

1. Procédé permettant d'établir la plausibilité d'une circulation à contresens d'un véhicule automobile (11) empruntant une bretelle d'accès à une voie unidirectionnelle (2), le procédé comprenant les étapes consistant à :
- détecter au moins une information de virage d'une voie actuelle (9) du véhicule automobile (11), dans lequel au moins un capteur (12) du véhicule automobile (11) est utilisé pour la détection, ledit au moins un capteur comprenant un capteur d'image ;
- identifier au moins une information de virage d'une voie autorisée (10) ;
- déterminer un écart entre l'information de virage détectée et l'information de virage identifiée ; et
- établir la plausibilité d'une circulation à contresens s'il existe un écart, ou si une valeur limite d'un écart est franchie,
- **caractérisé en ce qu'**un système de navigation (13) du véhicule automobile (11) détecte si le véhicule automobile (11) se trouve sur une voie opposée, et **en ce que** l'information de virage de la voie autorisée (10) est identifiée au moyen du système de navigation (13) du véhicule automobile (11).

2. Procédé selon la revendication 1, dans lequel l'information de virage comprend un rayon, une direction et/ou un tracé du virage (4, 5).

3. Procédé selon l'une quelconque des revendications précédentes 1 à 2, dans lequel, pour l'identification, d'abord une voie autorisée (10) et ensuite au moins une information de virage de la voie autorisée (10) sont identifiées.

4. Procédé selon l'une quelconque des revendications 1 à 3, dans lequel le procédé est activé au niveau d'une bretelle d'accès (3) à la voie unidirectionnelle (2).

5. Procédé selon l'une quelconque des revendications 1 à 4, dans lequel l'identification (130), la détermination (140) et/ou l'établissement de la plausibilité (150) sont effectués dans un dispositif (16) externe au véhicule automobile (11).

6. Dispositif de commande et de détection permettant d'établir la plausibilité d'une circulation à contresens d'un véhicule automobile (11) empruntant une bretelle d'accès à une voie unidirectionnelle (2), présentant
- un moyen aménagé pour détecter (12) au moins une information de virage d'une voie actuelle (9) du véhicule automobile (11), le moyen (12) présentant au moins un capteur d'image ;
- un moyen aménagé pour identifier (13, 14) au moins une information de virage d'une voie autorisée (10) ;
- un moyen aménagé pour déterminer (14) un écart entre l'information de virage détectée et l'information de virage identifiée ; et
- un moyen aménagé pour établir la plausibilité (14) d'une circulation à contresens s'il existe un écart, ou si une valeur limite d'un écart est franchie,
**caractérisé en ce que** ladite au moins une information de virage d'une voie autorisée (10) est identifiée au moyen d'un système de navigation (13) du véhicule automobile (11), au moyen duquel on détecte en outre si le véhicule automobile (11) se trouve sur une voie opposée.

7. Dispositif de commande et de détection selon la revendication 6, dans lequel le moyen de détection (12) présente au moins un capteur inertiel.
